# EUROPEAN PATENT APPLICATION

(11) **EP 1 973 175 A1**
(43) Date of publication of application: **24.09.2008**
(21) Application number: 06835023.0
(22) Date of filing: 20.12.2006
(51) Int. Cl.: H01L 33/00, H05B 37/02

(54) **LIGHT EMITTING DEVICE AND ILLUMINATION INSTRUMENT**

(30) Priority: 22.12.2005 JP 2005369551; 22.12.2005 JP 2005369561
(71) Applicant: ROHM CO., LTD., Kyoto-shi, Kyoto 615-8585 (JP)
(72) Inventor: SHAKUDA, Yukio, Kyoto-shi, Kyoto 6158585 (JP)
(74) Representative: TBK-Patent
(86) International application number: PCT/JP2006/325403
(87) International publication number: WO 2007/072873

(57) **Abstract**

To provide a light emitting unit and a lighting apparatus capable of handling different voltages.

A lighting apparatus 1 includes a switching controller 2 and a light emitting unit 3. The light emitting unit 3 includes two light emitting arrays 21a and 21b and three voltage input terminals 22a to 22c. The switching controller 2 switches connection of the voltage input terminals 22a to 22c according to a supplied voltage of a power supply to connect the light emitting arrays 21a and 21b in parallel or series. A specified voltage is thus applied to the light emitting arrays 21a and 21b.

## Description

### [TECHNICAL FIELD]

The present invention relates to a light emitting unit including a plurality of semiconductor light emitting devices formed on a same substrate and a lighting apparatus.

### [BACKGROUND ART]

A light emitting unit including a plurality of semiconductor light emitting devices on a same substrate is hitherto been known.

For example, as shown in FIG. 18, Patent Literature 1 disclosed a light emitting unit 200 including light emitting arrays 202 having semiconductor light emitting devices 201a and 201b provided on a same substrate. In the light emitting unit 200, the semiconductor light emitting devices 201a of the light emitting arrays 202 are arranged in such a manner that the direction of current flowing through the light emitting arrays 201a is opposite to that of the light emitting arrays 201b. The light emitting unit 200 is provided with two common voltage input terminals 203a and 203b at both ends of the both light emitting arrays 202 and is connected to an AC power supply P through these voltage input terminals 203a and 203b.

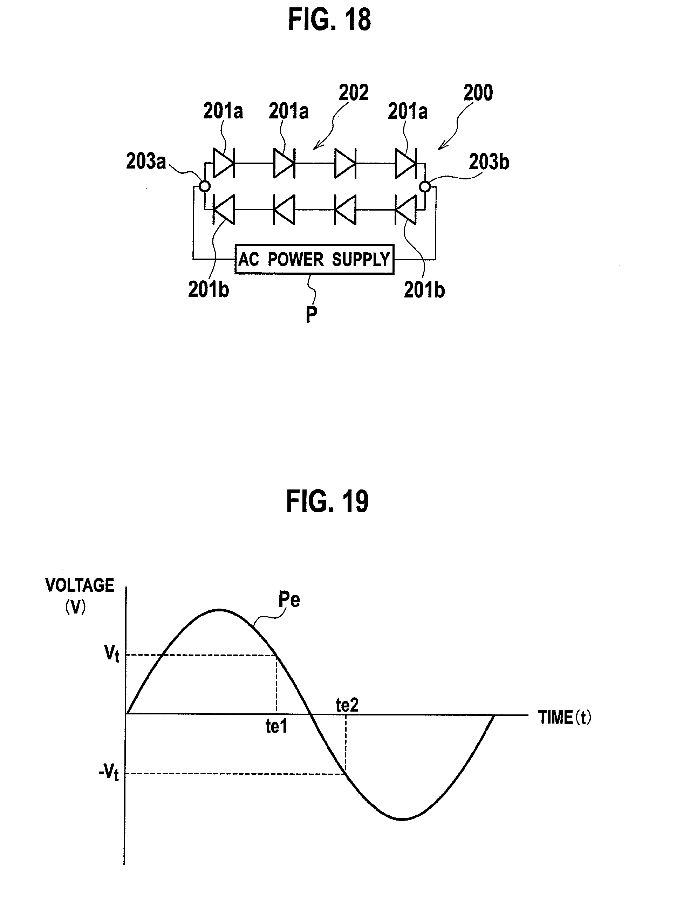

When AC power Pe shown in FIG. 19 is supplied by the AC power supply P between the voltage input terminals 203a and 203b of the light emitting unit 200, the semiconductor light emitting devices 201a emit light while the applied voltage is positive, and the other semiconductor light emitting devices 201b emit light while the applied voltage is negative. By causing the semiconductor light emitting devices 201a and 201b to emit light alternately in such a manner, it is possible to shorten time when the light emitting arrays 202 are off to a certain extent in the light emitting unit 200.
[Patent Literature 1] Japanese Patent Laid-open Publication No. 2004-6582

### [DISCLOSURE OF THE INVENTION]

### [PROBLEMS TO BE SOLVED BY THE INVENTION]

However, the light emitting unit 200 of the aforementioned Patent Literature 1 is provided with only the two voltage input terminals 203a and 203b and can handle only a single voltage. Accordingly, if voltage higher than specified voltage is applied to the voltage input terminals 203a and 203b, overvoltage applied to the individual semiconductor light emitting devices 201a and 201b causes current exponentially increased to flow through the semiconductor light emitting devices 201a and 201b. This gives damage in the semiconductor light emitting devices 201a and 201b or shortens the life thereof. On the contrary, if voltage lower than the specified voltage is applied to the voltage input terminals 203a and 203b, the semiconductor light emitting devices 201a and 201b do not emit light or, if emitting light, the emitted light is weak.

Moreover, even if forward voltage is applied to the semiconductor light emitting devices 201a and 201b, the semiconductor light emitting devices 201a and 201b cannot be turned on while the applied voltage is less than a certain threshold value Vₜ. Accordingly, even if the AC power Pe shown in FIG. 19 is applied, the light emitting devices 201a and 201b are not turned on between times tₑ₁ and tₑ₂ when the absolute value of the applied voltage is not more than the threshold voltage Vₜ. The light emitting unit 200 therefore has a problem of long off time when either of the semiconductor light emitting devices 201a and 201b does not emit light and that causes significant flicker.

The present invention was made to solve the aforementioned problems, and an object of the present invention is to provide a light emitting unit and a lighting apparatus which can handle different voltages or to provide a light emitting unit with any of the semiconductor light emitting devices being on for long time.

### [MEANS FOR SOLVING THE PROBLEM]

To achieve the aforementioned object, an invention according to claim 1 is a semiconductor light emitting unit, including: N light emitting arrays (N>=2) each including one or a plurality of semiconductor light emitting devices formed on a same substrate, the light emitting arrays having same specified voltage; and at least (N+1) voltage input terminals provided corresponding to ends of the individual light emitting arrays. The voltage input terminals allow the light emitting arrays to be brought into serial or parallel connections to each other in order that the specified voltage is applied to each light emitting array.

An invention according to claim 2 is the light emitting unit of claim 1 in which each of the light emitting arrays includes a same number of the semiconductor light emitting devices.

An invention according to claim 3 is the light emitting unit of any one of claims 1 and 2, in which each of the light emitting arrays includes the 2M semiconductor light emitting devices and the M semiconductor light emitting devices are connected to allow current to flow therethrough in a direction opposite to that of the remaining M semiconductor light emitting arrays.

An invention according to claim 4 is the light emitting unit of any one of claims 1 to 3, in which the number of the light emitting arrays is two and the number of the voltage input terminals is three.

A invention according to claim 5 is a lighting apparatus, including: a light emitting unit having N light emitting arrays (N>=2) having one or a plurality of semiconductor light emitting devices formed on a same substrate, the light emitting arrays having same specified voltage, and at least (N+1) voltage input terminals provided corresponding to ends of the individual light emitting arrays; and switching controller switching the voltage input terminals. According to voltage applied to the light emitting unit, the switching controller causes the light emitting arrays to be connected in parallel or in series to set voltage applied to each of the light emitting arrays to the specified voltage and automatically switches the voltage input terminals to which the voltage is inputted.

An invention according to claim 6 is a light emitting unit including: three light emitting arrays each including one or a plurality of semiconductor light emitting devices formed on a same substrate; and three power input terminals which are provided at ends of the respective light emitting arrays and are supplied with a three-phase AC power supply. The power input terminals are individually supplied with three types of AC power with different phases.

An invention according to claim 7 is the light emitting unit according to claim 6, in which the other ends of the three light emitting arrays are electrically connected to each other and grounded.

An invention according to claim 8 is the light emitting unit according to any one of claims 6 and 7, in which at least any one of the three light emitting arrays is supplied with voltage not less than a threshold voltage necessary to light the light emitting array.

An invention according to claim 9 is the light emitting unit according to any one of claims 6 to 8, in which each of the light emitting arrays includes the 2M semiconductor light emitting devices and the M semiconductor light emitting devices are connected to allow current to flow therethrough in a direction opposite to that of the remaining the M semiconductor light emitting devices.

An invention according to claim 10 is the light emitting unit according to any one of claims 6 to 9, in which each of the light emitting arrays includes a same number of the semiconductor light emitting devices.

### [EFFECTS OF THE INVENTION]

According to the light emitting unit of the present invention, by providing the (N+1) or more voltage input terminals corresponding to the ends of the N light emitting arrays, according to the applied voltage, the voltage input terminals connected to the power supply can be selected and the voltage input terminals can be connected to each other. This allows the light emitting arrays to be connected in series or in parallel and connected to a power supply. Accordingly, the specified voltage of the light emitting arrays can be supplied to each light emitting array. For different applied voltages, it is possible to prevent damage of the semiconductor light emitting device of the light emitting arrays due to overvoltage and moreover and to prevent non-light emission of the semiconductor light emitting devices due to low voltage, thus allowing the semiconductor light emitting devices to emit properly.

Moreover, according to a lighting apparatus of the present invention, the switching controller capable of switching the voltage input terminals of the light emitting unit is provided. The voltage input terminals to which the voltage is inputted can be therefore automatically connected to the power supply or connected to each other based on the applied voltage. Accordingly, a user can easily connect the lighting apparatus to a power supply regardless of the applied voltage.

According to the light emitting unit of the present invention, the three power input terminals provided at the ends of the light emitting arrays are supplied with three types of AC power with different phases from the three-phase AC power supply. It is therefore possible to increase time when the voltage not less than the threshold voltage of the light emitting arrays is applied to at least one of the light emitting arrays. Accordingly, the time when at least one of the three light emitting arrays is lighted can be increased. It is therefore possible to increase lighting time of the lighting apparatus and to prevent flickering.

### [BRIEF DESCRIPTION OF THE DRAWINGS]

FIG. 1 is an entire constitutional view of a lighting apparatus including a light emitting unit according to a first embodiment of the present invention.
FIG. 2 is a circuit diagram of the lighting apparatus before connecting to a power supply.
FIG. 3 is a schematic plan view of one of semiconductor light emitting devices constituting the light emitting unit.
FIG. 4 is a cross-sectional view of some of the semiconductor light emitting devices constituting the light emitting unit.
FIG. 5 is an operation explanatory view in the case where the lighting apparatus is connected to a 200V AC power supply.
FIG. 6 is an operation explanatory view in the case where the lighting apparatus is connected to a 100V AC power supply.
FIG. 7 is an entire constitutional view of a lighting apparatus including a light emitting unit according to a first modification of the first embodiment.
FIG. 8 is an operation explanatory view in the case where the lighting apparatus of the first modification is connected to a 200 V AC power supply.
FIG. 9 is an operation explanatory view in the case where the lighting apparatus of the first modification is connected to a 100 V AC power supply.
FIG. 10 is an operation explanatory view in the case where the lighting apparatus of the first modification is connected to a 50 V AC power supply.
FIG. 11 is an entire constitutional view of a lighting apparatus including a light emitting unit according to a second modification of the first embodiment.
FIG. 12 is an operation explanatory view in the case where the lighting apparatus of the second modification is connected to a 200 V AC power supply.
FIG. 13 is an operation explanatory view in the case where the lighting apparatus of the second modification is connected to a 100 V AC power supply.
FIG. 14 is an entire constitutional view of a light emitting unit according to a second embodiment of the present invention.
FIG. 15 is a circuit diagram of the light emitting unit.
FIG. 16 is a view showing a relationship between time and voltage of AC power supplied to individual light emitting arrays.
FIG. 17 is an entire constitutional view of a light emitting unit according to a modification of the second embodiment.
FIG. 18 is a schematic entire constitution view showing a conventional light emitting unit.
FIG. 19 is a view showing AC power supplied to the conventional light emitting unit.

### [EXPLANATION OF REFERENCE NUMERALS]

1, 1A, 1B: LIGHTING APPARATUS
2, 2A, 2B: SWITCHING CONTROLLER
3, 3A, 3B: LIGHT EMITTING UNIT
11a, 11b: INPUT TERMINAL
12a to 12c: OUTPUT TERMINAL
21a, 21b: LIGHT EMITTING ARRAY
22a to 22c: VOLTAGE INPUT TERMINAL
23a, 23b: SEMICONDUCTOR LIGHT EMITTING DEVICE
31: SUBSTRATE
32: SEMICONDUCTOR STACK
33: LOW TEMPERATURE BUFFER LAYER
34: HIGH TEMPERATURE BUFFER LAYER
35: n-TYPE SEMICONDUCTOR LAYER
36: MQW ACTIVE LAYER
37: p-TYPE SEMICONDUCTOR LAYER
38: TRANSPARENT ELECTRODE
39: ISOLATION TRENCH
40: INSULATING FILM
51a to 51d: LIGHT EMITTING ARRAY
52a to 52h: VOLTAGE INPUT TERMINAL
61a, 61b: LIGHT EMITTING ARRAY
62a to 62d: VOLTAGE INPUT TERMINAL
101: LIGHT EMITTING UNIT
121a to 121c: LIGHT EMITTING ARRAY
122a to 122c: POWER INPUT TERMINAL
P₂₀₀: AC POWER SUPPLY
P₁₀₀: AC POWER SUPPLY
P₅₀: AC POWER SUPPLY
P'_{200:} DC POWER SUPPLY
P'₁₀₀: DC POWER SUPPLY
P: THREE-PHASE AC POWER SUPPLY
Pa: AC POWER
Pb: AC POWER
Pc: AC POWER
Vₜ: THRESHOLD VOLTAGE

### [BEST MODE FOR CARRYING OUT THE INVENTION]

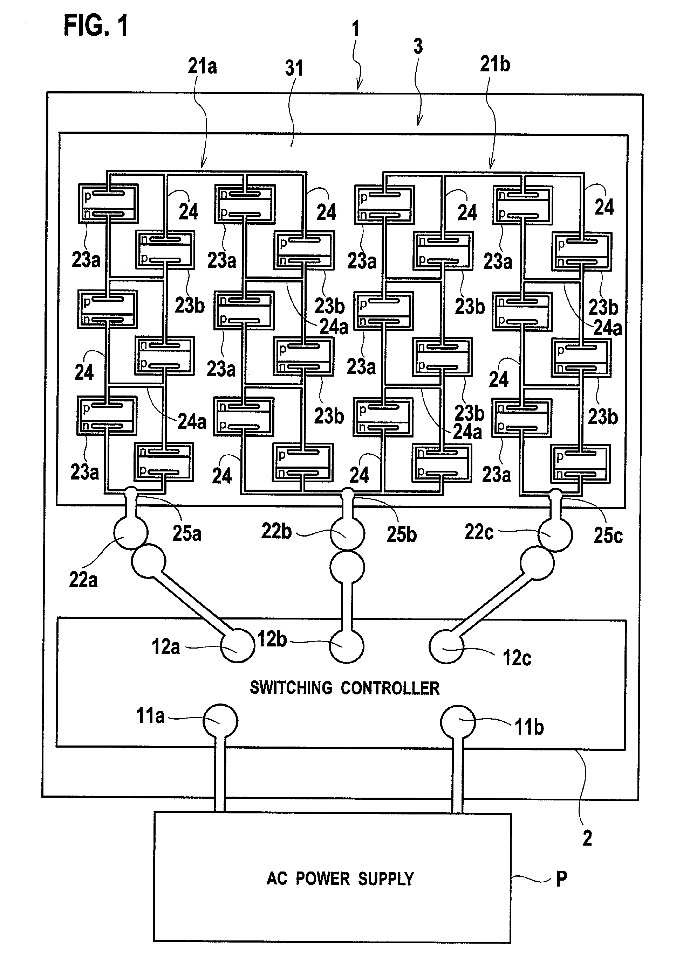

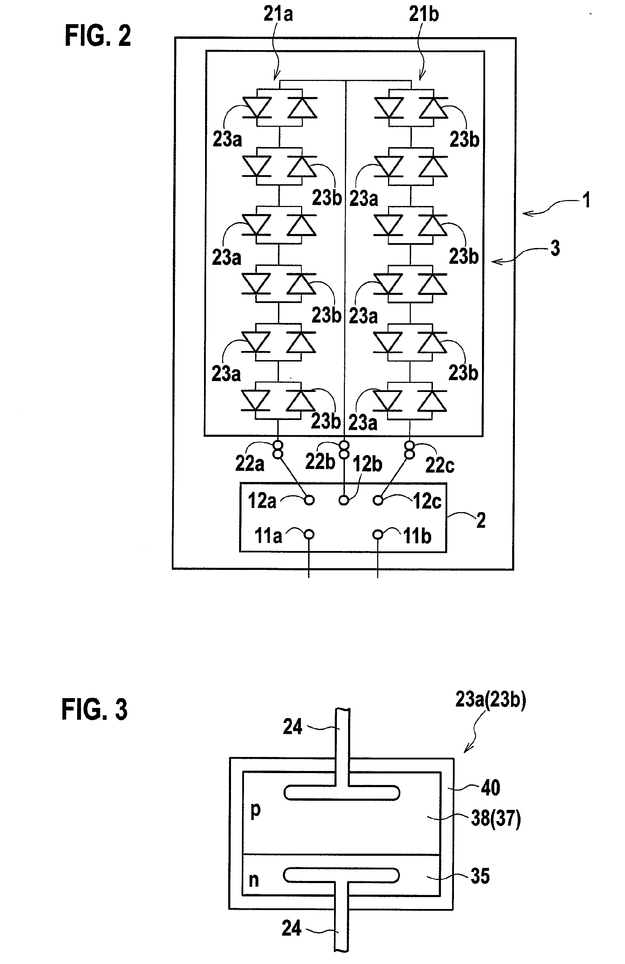

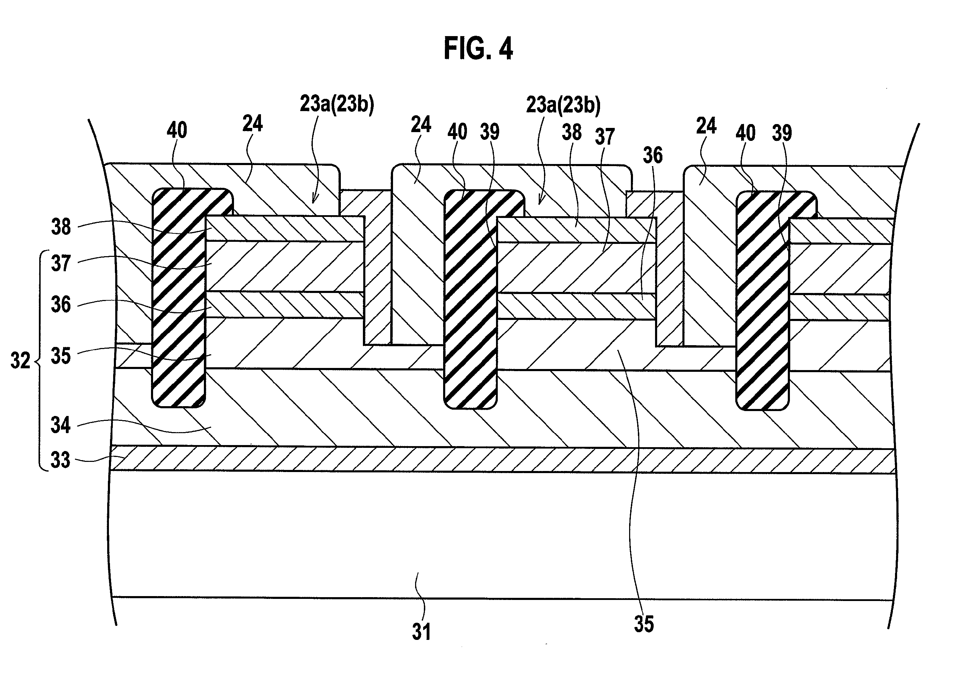

Hereinafter, a description is given of a first embodiment of the present invention with reference to the drawings. FIG. 1 is an entire constitutional view of a lighting apparatus including a light emitting unit according to the first embodiment of the present invention. FIG. 2 is a circuit diagram of a lighting apparatus before connecting to a power supply yet. FIG. 3 is a schematic plan view of one of semiconductor light emitting devices constituting the light emitting unit. FIG. 4 is a cross-sectional view of some of the semiconductor light emitting devices constituting the light emitting unit.

As shown in FIG. 1, a lighting apparatus 1 includes a switching controller 2 and a light emitting unit 2.

As shown in FIGS. 1 and 2, the switching controller 2 includes two input terminals 11a and 11b to which electrical power is inputted from an AC power supply P and three output terminals 12a to 12c through which power is outputted to the light emitting unit 3. The switching controller 2 is configured to automatically switch connection between the input terminals 11a and 11b and the output terminals 12a to 12c based on voltage supplied from an AC power supply P so that voltage applied to the later-described light emitting arrays 21a and 21b becomes the specified voltage.

As shown in FIGS. 1 and 2, the light emitting unit 3 includes two light emitting arrays 21a and 21b which are formed on a same substrate 31 bonded to an insulating package (not shown) and three voltage input terminals 22a to 22c. The substrate 31 is bonded to the package by an insulating resin adhesive.

Each of the light emitting arrays 21a and 21b is configured to handle a voltage of 100 V (specified voltage). Accordingly, the two light emitting arrays 21a and 21b connected in series can handle a voltage of 200 V.

As shown in FIG. 1, each of the light emitting arrays 21a and 21b includes twelve semiconductor light emitting devices (light emitting elements, light emitting diodes) 23a and 23b formed on the same substrate 31 and wiring films 24 to connect the semiconductor light emitting devices 23a and 23b. As shown in FIGS. 1 and 2, the six semiconductor light emitting devices 23a and six semiconductor light emitting devices 23b are arranged with pn junctions oppositely oriented so that current flows in opposite directions.

The p sides of the six semiconductor light emitting devices 23a are connected to the n sides of the adjacent semiconductor light emitting devices 23a by the wiring films 24 so that the six semiconductor light emitting devices 23a are connected in series. The p sides of the six semiconductor light emitting devices 23b are connected to the n sides of the adjacent semiconductor light emitting devices 23b by the wiring films 24 so that the six semiconductor light emitting devices 23b are also connected in series. In other words, the six semiconductor light emitting devices 23a and the remaining six semiconductor light emitting devices 23b are connected in series so that current flows in directions opposite to each other.

Accordingly, even in the case where reverse voltage is applied to the semiconductor light emitting devices 23a, forward voltage is applied to the other semiconductor light emitting devices 23b, and current flows through the other semiconductor light emitting devices 23b. On the contrary, even in the case where reverse voltage is applied to the semiconductor light emitting devices 23b, forward voltage is applied to the other semiconductor light emitting devices 23a, and current flows through the other semiconductor light emitting devices 23a.

In other words, even when the light emitting unit 3 is connected to the AC power supply P, forward voltage is applied to any ones of the semiconductor light emitting devices 23a and 23b to allow current to flow therethrough. Accordingly, any ones of the semiconductor light emitting devices 23a and 23b can be always turned on.

Moreover, auxiliary wiring films 24a are provided across the wiring films 24 connecting pairs of the semiconductor light emitting devices 23a and 23b and adjacent pairs of the semiconductor light emitting devices 23a and 23b.

Next, the semiconductor light emitting devices 23a and 23b are described with reference to FIGS. 3 and 4.

Each of the semiconductor light emitting devices 23a and 23b includes the substrate 31 and a semiconductor stack 32 formed on the substrate 31. The semiconductor stack 32 includes a low temperature buffer layer 33, a high temperature buffer layer 34, an n-type semiconductor layer 35, an MQW active layer 36, a p-type semiconductor layer 37, and a transparent electrode 38.

The low temperature buffer layer 33 is composed of a GaN layer with a thickness of about 0.005 to 0.1 µm. The high temperature buffer layer 34 is composed of an undoped GaN layer with a thickness of about 1 to 3 µm. The high temperature buffer layer 34 is semi-insulating for insulation of the semiconductor light emitting devices 23a and 23b.

The n-type semiconductor layer 35 includes an about 1 to 5 µm thick contact layer composed of an n-GaN layer doped with Si as an n-type dopant and a confinement layer composed of an n-AlGaN layer. Part of the MQW active layer 36, p-type semiconductor layer 37, and transparent electrode 38 are etched so as to expose a part of the contact layer of the n-type semiconductor layer 35.

The MQW active layer is composed of a multi-quantum well structure with a thickness of about 0.05 to 0.3 µm. Specifically, the MQW active layer 36 has a band gap energy smaller than that of the confinement layer and includes three to eight pairs of about 1 to 3 nm thick well layers of In_{0.13}Ga_{0.87}N and barrier layers composed of about 10 to 20 nm thick GaN layers which are stacked on each other.

The p-type semiconductor layer 37 has a thickness of about 0.2 to 1.0 µm and includes a confinement layer composed of a p-AlGaN layer and a contact layer composed of a p-GaN layer.

The transparent electrode 38 is capable of transmitting light emitted by the MQW active layer 36 and is formed on the upper surface of the p-type semiconductor layer 37. The transparent electrode 38 is composed of a 0.01 to 0.5 µm thick ZnO layer. The transparent electrode 38 may be composed of ITO, an thin alloy layer of Ni and Au, or the like.

Isolation trenches 39 with a width of about 0.6 to 5 µm are formed between adjacent pairs of the semiconductor light emitting devices 23a and 23b by etching a part of the high temperature buffer layer 34, the n-type semiconductor layer 35, the MQW active layer 36, the p-type semiconductor layer 37, and the transparent electrode 38. In the isolation trenches 39, insulating films 40 composed of SiO₂ are formed for insulation of the adjacent semiconductor light emitting devices 23a and 23b.

As shown in FIG. 4, in order to connect the transparent electrodes 38 of the semiconductor light emitting devices 23a and 23b and the contact layers of the n-type semiconductor layers 35 of the semiconductor light emitting devices 23a and 23b adjacent thereto, the wiring films 24 are formed over the insulating films 40. Each of The wiring films 24 is composed of an about 0.3 to 1.0 µm thick metallic film of Au or Al, or the like.

The voltage input terminals 22a to 22c are composed of Fe-Ni plating or Cu-Ni plating. The voltage input terminals 22a and 22c are connected to ends of the light emitting arrays 21a and 21b through pad electrodes 25a and 25c. The voltage input terminal 22b is connected through the pad electrode 25b to a part connected to the ends of the light emitting arrays 21a and 21b. The voltage input terminals 22a to 22c are connected to the pad electrodes 25a to 25c through Au or Al wires.

The light emitting unit 3 is manufactured by a known semiconductor manufacturing method or the like.

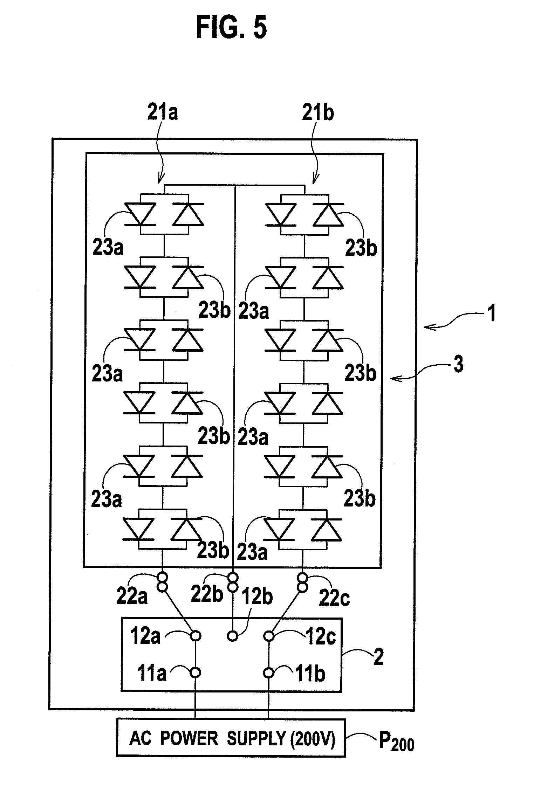

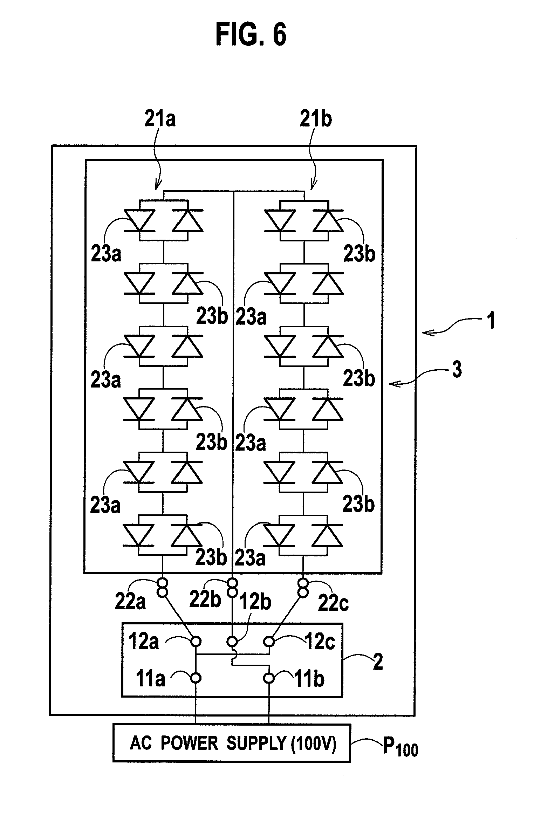

Next, a description is given of operations of the lighting apparatus 1 when the lighting apparatus 1 is connected to 200 V and 100 V AC power supplies with reference to FIGS. 2, 5, and 6. FIG. 5 is an operation explanatory view in the case where the lighting apparatus is connected to the 200 V AC power supply. FIG. 6 is an operation explanatory view in the case where the lighting apparatus is connected to the 100 V AC power supply.

First, as shown in FIG. 2, before the lighting apparatus 1 is connected to the power supply, the output terminals 12a to 12c of the switching controller 2 are not connected to the input terminals 11a and 11b.

Next, as shown in FIG. 5, when the lighting apparatus 1 is connected to a 200 V AC power supply P₂₀₀, the voltage input terminal 22a is connected to the input terminal 11a through the output terminal 12a, and the voltage input terminal 22c is connected to the input terminal 11b through the output terminal 12c. The output terminal 12b is not connected and isolated. Voltage of 200 V is then applied to the both ends of the light emitting unit 3 with the light emitting arrays 21a and 21b connected in series. Accordingly, the specified voltage of 100 V is applied to each of the light emitting arrays 21a and 22b, thus allowing the light emitting unit 3 to normally operate.

On the other hand, as shown in FIG. 6, when the lighting apparatus 1 is connected to a 100 V AC power supply P₁₀₀, the voltage input terminals 22a and 22c are connected to the input terminal 11a through the output terminals 12a and 12c, respectively, and the voltage input terminal 22b is connected to the input terminal 11b through the output terminal 12b. Thus the light emitting unit is in the condition where the light emitting arrays 21a and 21b are connected in parallel. Accordingly, the specified voltage of 100 V is applied to the both ends of each of the light emitting arrays 21a and 22b, thus allowing the light emitting unit 3 to normally operate.

The light emitting unit 3 according to the present invention, as described above, includes the three voltage input terminals 22a to 22c corresponding to the two light emitting arrays 21a and 21b. It is therefore possible to select the voltage input terminals 22a to 22c connected to the AC power supply P or connect the voltage input terminals 22a to 22c to each other according to the supplied voltage.

The light emitting unit 3 can be connected to the AC power supply P with the light emitting arrays 21a and 21b connected to each other in series or in parallel. Accordingly, voltage applied to each of the light emitting arrays 21a and 21b can be 100 V as the specified voltage of the light emitting arrays 21a and 21b. It is therefore possible to apply a same voltage to the light emitting arrays 21a and 21b despite the difference supplied voltage. Accordingly it is possible to prevent heat generation and damage of the semiconductor light emitting devices 23a and 23b due to overvoltage and emit light at equal illuminance.

Moreover, the lighting apparatus 1 according to the present invention is provided with the switching controller 2 which is capable of automatically switching connections between the voltage input terminals 22a to 22c of the light emitting unit 3 and the AC power supply. Accordingly, based on the applied voltage, the voltage input terminals 22a to 22c to which the voltage is applied can be automatically connected to the AC power supply P and the voltage input terminals 22a to 22c are connected to each other. A user can therefore easily connect the lighting apparatus 1 to the AC power supply P regardless of the supplied voltage.

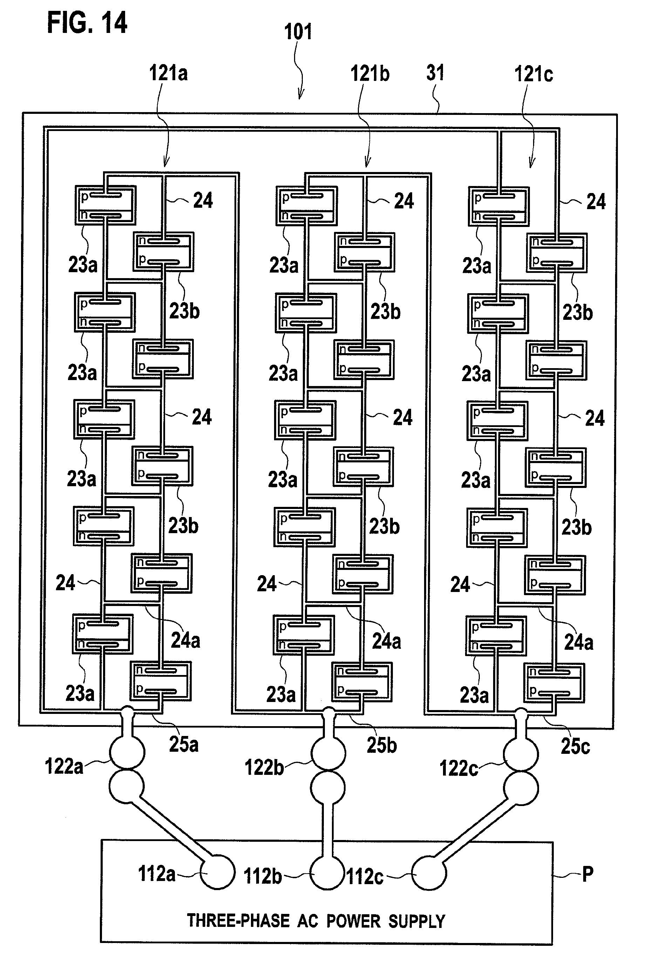

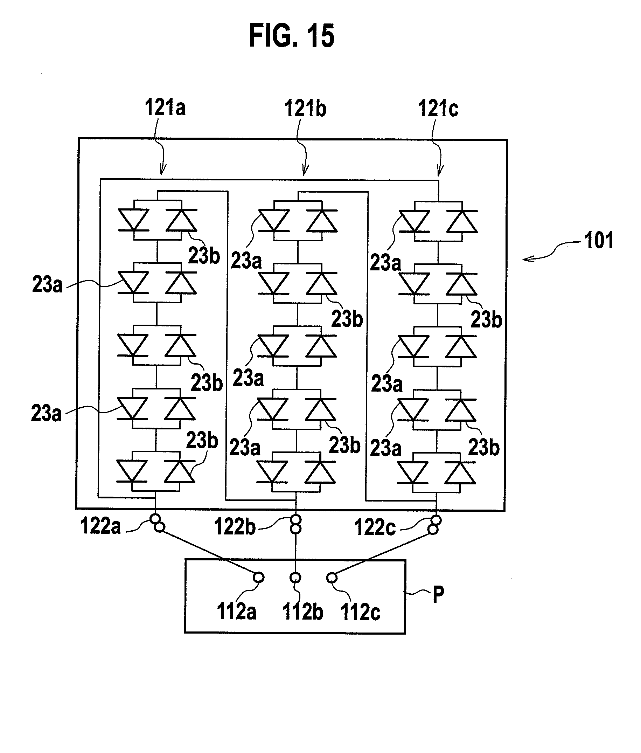

Next, a description is given of a second embodiment of the present invention with reference to the drawings. FIG. 14 is an entire constitutional view of a light emitting unit according to of the second embodiment of the present invention. FIG. 15 is a circuit configuration diagram of the light emitting unit.

As shown in FIGS. 14 and 15, a light emitting unit 101 includes three light emitting arrays 121a to 121c and three power input terminals 122a to 122c, which are formed on the same substrate 31 bonded to an insulating package (not shown). The substrate 31 is bonded to the package by an insulating resin adhesive.

As shown in FIG. 14, each of the light emitting arrays 121a to 121c includes ten semiconductor light emitting devices (light emitting diodes) 23a and 23b formed on the same substrate 31 and wiring films 24 connecting the semiconductor light emitting devices 23a and 23b. As shown in FIGS. 14 and 15, the five semiconductor light emitting devices 23a and five semiconductor light emitting devices 23b are arranged with the pn junctions oppositely oriented so that current flows therethrough in the opposite directions.

The p-sides of the semiconductor light emitting devices 23a are connected to the n-sides of the adjacent semiconductor light emitting devices 23a through the wiring films 24 so that the five semiconductor light emitting devices 23a are connected in series. The p-sides of the semiconductor light emitting devices 23b are connected to the n-sides of the adjacent semiconductor light emitting devices 23b through the wiring films 24 so that the five semiconductor light emitting devices 23b are also connected in series. The six semiconductor light emitting devices 23a and the remaining six semiconductor light emitting devices 23b are connected in series so that current flows in the opposite directions.

Accordingly, even when reversed voltage is applied to the semiconductor light emitting devices 23a, forward voltage not less than the threshold voltage Vₜ is applied to the other semiconductor light emitting devices 23b, and current flows through the semiconductor light emitting devices 23b. On the contrary, even when reversed voltage is applied to the semiconductor light emitting devices 23b, forward voltage not less than the threshold voltage Vₜ is applied to the other semiconductor light emitting devices 23a, and current flows through the semiconductor light emitting devices 23b.

Moreover, the auxiliary wiring films 24a are provided across the wiring films 24 which individually connect pairs of the semiconductor light emitting devices 23a and 23b and adjacent pairs of the semiconductor light emitting devices 23a and 23b.

Next, the semiconductor light emitting devices 23a and 23b are described with reference to FIGS. 3 and 4.

Each of the semiconductor light emitting devices 23a and 23b includes the substrate 31 and a semiconductor stack 32 formed on the substrate 31. The semiconductor stack 32 includes a low temperature buffer layer 33, a high temperature buffer layer 34, an n-type semiconductor layer 35, an MQW active layer 36, a p-type semiconductor layer 37, and a transparent electrode 38.

The low temperature buffer layer 33 is composed of a GaN layer with a thickness of about 0.005 to 0.1 µm. The high temperature buffer layer 34 is composed of an undoped GaN layer with a thickness of about 1 to 3 µm. The high temperature buffer layer 34 is semi-insulating for insulation of the semiconductor light emitting devices 23a and 23b.

The n-type semiconductor layer 35 includes an about 1 to 5 µm thick contact layer composed of an n-GaN layer doped with Si as an n-type dopant and a confinement layer composed of an n-AlGaN layer. Part of the MQW active layer 36, p-type semiconductor layer 37, and transparent electrode 38 are etched so as to expose a part of the contact layer of the n-type semiconductor layer 35.

The MQW active layer is composed of a multi-quantum well structure with a thickness of about 0.05 to 0.3 µm. Specifically, the MQW active layer 36 has a band gap energy smaller than that of the confinement layer and includes three to eight pairs of about 1 to 3 nm thick well layers of In_{0.13}Ga_{0.87}N and barrier layers composed of about 10 to 20 nm thick GaN layers which are stacked on each other.

The p-type semiconductor layer 37 has a thickness of about 0.2 to 1.0 µm and includes a confinement layer composed of a p-AlGaN layer and a contact layer composed of a p-GaN layer.

The transparent electrode 38 is capable of transmitting light emitted by the MQW active layer 36 and is formed on the upper surface of the p-type semiconductor layer 37. The transparent electrode 38 is composed of a 0.01 to 0.5 µm thick ZnO layer. The transparent electrode 38 may be composed of ITO, an thin alloy layer of Ni and Au, or the like.

Isolation trenches 39 with a width of about 0.6 to 5 µm are formed between adjacent pairs of the semiconductor light emitting devices 23a and 23b by etching a part of the high temperature buffer layer 34, the n-type semiconductor layer 35, the MQW active layer 36, the p-type semiconductor layer 37, and the transparent electrode 38. In the isolation trenches 39, insulating films 40 composed of SiO₂ are formed for insulation of the adjacent semiconductor light emitting devices 23a and 23b.

As shown in FIG. 4, in order to connect the transparent electrodes 38 of the semiconductor light emitting devices 23a and 23b and the contact layers of the n-type semiconductor layers 35 of the semiconductor light emitting devices 23a and 23b adjacent thereto, the wiring films 24 are formed over the insulating films 40. Each of The wiring films 24 is composed of an about 0.3 to 1.0 µm thick metallic film of Au or Al, or the like.

Voltage input terminals 122a to 122c are composed of Fe-Ni plating or Cu-Ni plating. The power input terminal 122a is connected through the pad electrode 25a to an end of the light emitting array 121a and the other end of the light emitting array 121c. The power input terminal 122b is connected through the pad electrode 25b to an end of the light emitting array 121b and the other end of the light emitting array 121a. The power input terminal 122c is connected through the pad electrode 25c to an end of the light emitting array 121c and the other end of the light emitting array 121b. The power input terminals 122a to 122c are connected to the pad electrodes 25a to 25c through Au or Al wires.

The power input terminals 122a to 122c are connected to output terminals 112a to 112c of a three-phase AC power supply P, respectively. The three-phase AC power supply thus supplies AC powers with different phases to the individual light emitting arrays 121a to 121c through the power input terminals 122a to 122c.

The aforementioned light emitting unit 101 is manufactured by a known semiconductor manufacturing method or the like.

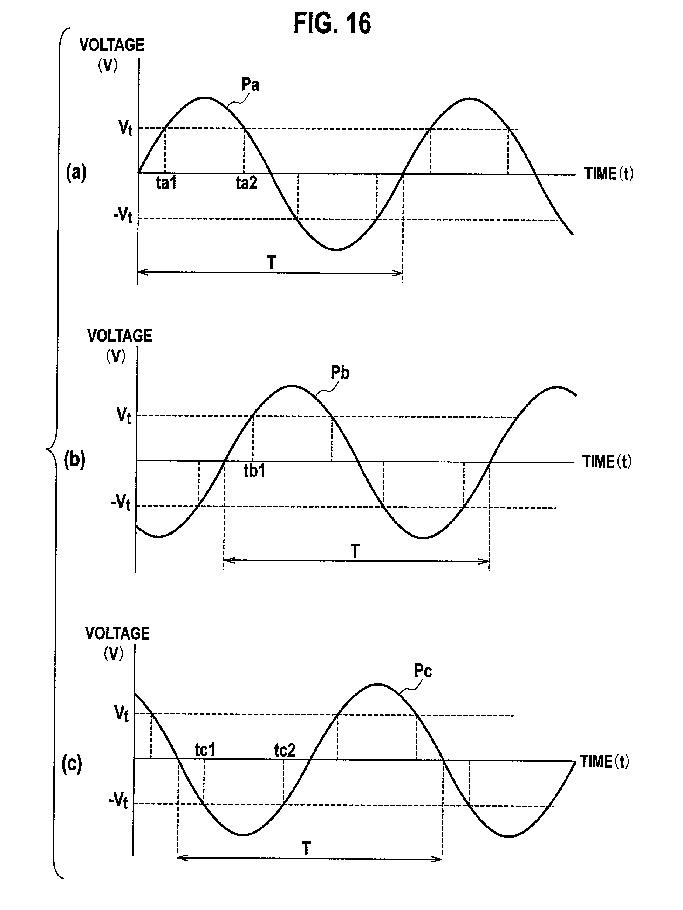

Next, a description is given of an operation of the light emitting unit 101 which is connected to the three-phase AC power supply P supplied to a motor or the like with reference to FIG. 16. FIG. 16 is a voltage-time relationship diagram of AC powers supplied to the light emitting arrays.

AC powers Pa, Pb, and Pc shown in FIGS. 16(a), 16(b), and 16(c) are supplied to the light emitting arrays 121a, 121b, and 121c, respectively. Herein, as shown in FIGS. 16(a) , 16(b) , and 16(c) , the AC powers Pa to Pc supplied to the light emitting arrays 121a to 121c are different in phase by one third of period T. Moreover, Vₜ and -Vₜ are threshold voltages necessary to cause the semiconductor light emitting devices 23a and 23b of the light emitting arrays 121a to 121c to emit light.

First, as shown in FIG. 16 (a) , at time tₐ₁, voltage supplied to the light emitting array 121a becomes Vₜ or more, and the light emitting array 121a lights up. Next, as shown in FIG. 16 (c) , at time t_{c1}, voltage supplied to the light emitting array 121c becomes -Vₜ or less, and the light emitting array 121c lights up. Accordingly, at and after the time t_{c1}, the light emitting arrays 121a and 121c are both lighted.

Next, as shown in FIG. 16(a), at time tₐ₂, the voltage supplied to the light emitting array 121a becomes Vₜ or less, and the light emitting array 121a turns off. However, the light emitting array 121c is continuously lighted, and the light emitting unit 101 does not black out.

Next, as shown in FIG. 16(b), at time t_{b1}, the voltage supplied to the light emitting array 121b becomes Vₜ or more, the light emitting array 121b lights up. Herein, the light emitting array 121c is continuously lighted, and the light emitting arrays 121b and 121c are both lighted at and after the time t_{b1}.

Next, as shown in FIG. 16(c), at time t_{c2}, the voltage supplied to the light emitting array 121c becomes -Vₜ or more, and the light emitting array 121c turns off. However, the light emitting arrays 121b is continuously lighted, and the light emitting unit 101 does not black out.

The operation described above is repeated thereafter, thus allowing any one or two of the three light emitting arrays 121a to 121c to be always lighted.

As described above, the light emitting unit 101 according to the present invention is provided with the three light emitting arrays 121a to 121c and the three power input terminals 122a to 122c at the ends of the respective light emitting arrays 121a to 121c for connection of the three-phase AC power supply P, so that three powers with different phases can be supplied to the light emitting arrays 121a to 121c. This allows any one or two of the light emitting arrays 121a to 121c to be always supplied with voltage whose absolute value is not less than the threshold voltage Vₜ.

Accordingly, any one or two of the light emitting arrays 121a to 121c can keep lighted, and the light emitting unit 101 can be always lighted. It is therefore possible to prevent flickering and the like of the light emitting unit 101.

Hereinabove, the present invention is described in retail using the embodiments, but it is apparent to those skilled in the art that the present invention is not limited to the embodiments described in the specification. The present invention can be carried out as modified and changed modes without departing from the spirit and scope of the invention defined by the description of claims. Accordingly, the description of this specification is for illustrative purposes and does not impose any limitation on the present invention. A description is given below of modifications obtained by partially changing the embodiment.

For example, in the aforementioned first embodiment, the light emitting unit 3 is configured to be included in the lighting apparatus 1 but may be configured to be a separate unit.

Moreover, in the first embodiment, both of the light emitting arrays 21a and 21b light up also when the light emitting unit 3 is connected to the 100 V AC power supply. However, the light emitting unit 3 may be configured so that any one of the light emitting arrays 21a and 21b lights up when the light emitting unit 3 is connected to the 100 V AC power supply. In such a case, any one of the voltage input terminals 22a and 22c and the voltage input terminal 22b should be connected to the 100V AC power supply.

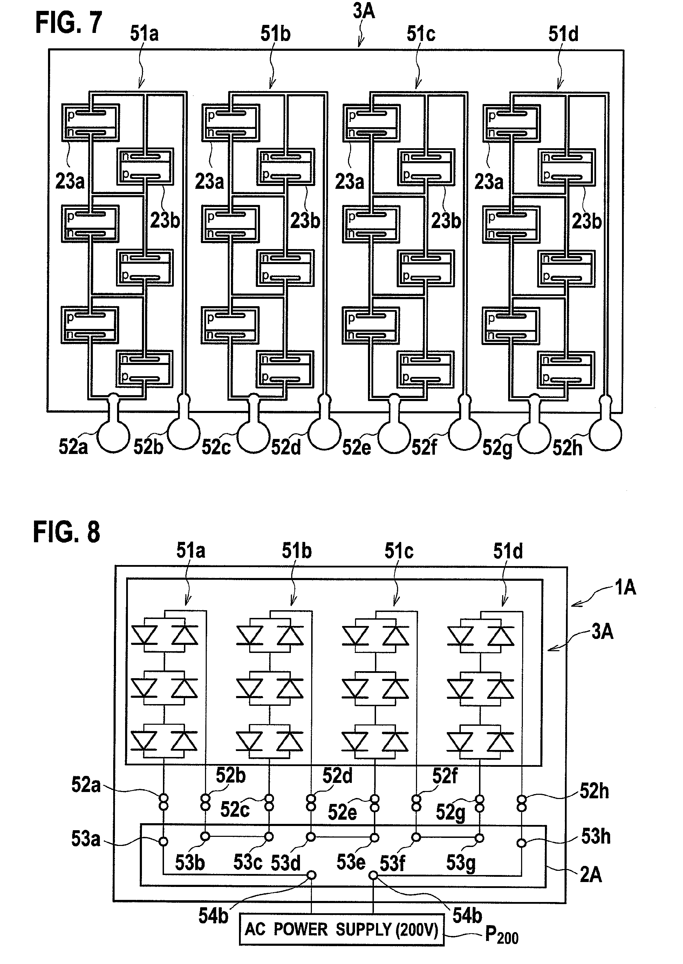

In the first embodiment, the light emitting unit 3 is provided with the two light emitting arrays 21a and 21b, but the light emitting unit may be provided with three or more light emitting arrays. For example, like a first modification shown in FIG. 7, a light emitting unit 3A may include four light emitting arrays 51a to 51d. An end of each of the light emitting arrays 51a to 51d is connected to any two of the voltage input terminals 52a to 52h.

Next, with reference to FIGS. 8 to 10, a description is given of an operation of a lighting apparatus 1A including the aforementioned light emitting unit 3A when the specified voltage of each light emitting arrays 51a to 51d is 50V. The lighting apparatus 1A includes a switching controller 2A having output terminals 53a to 53h corresponding to the voltage input terminals 52a to 52h and input terminals 54a and 54b to which AC power supply is given.

As shown in FIG. 8, when the lighting apparatus 1A is connected to the 200V AC power supply P₂₀₀, the switching controller 2A connects the voltage input terminals 52b, 52d, and 52f to the voltage input terminals 52c, 52e, and 52g, respectively, to connect the four light emitting arrays 51a to 51d in series. In such a state, the voltage input terminals 52a and 52h are connected to the AC power supply P₂₀₀ through the input terminals 54a and 54b, so that each of the light emitting arrays 51a to 51d is supplied with the specified voltage of 50 V and can be normally operated.

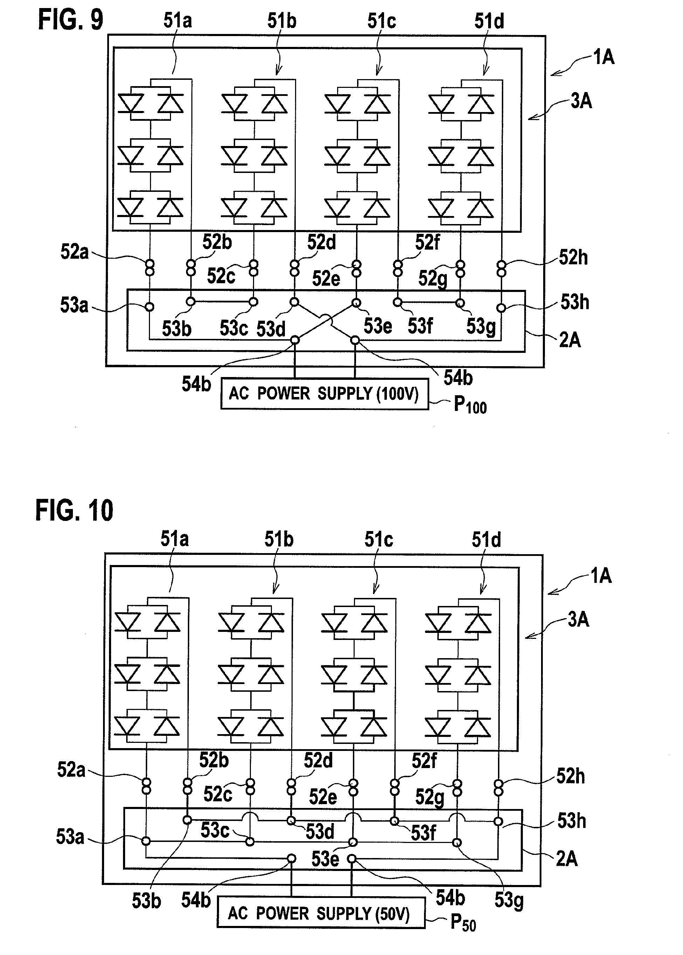

Next, as shown in FIG. 9, when the lighting apparatus 1A is connected to the 100 V AC power supply P₁₀₀, the switching controller 2A connects the voltage input terminal 52b to the voltage input terminal 52c to connect the light emitting arrays 51a and 51b in series and connects the voltage input terminal 52f to the voltage input terminal 52g to connect the light emitting arrays 51c and 51d in series. Furthermore, the switching controller 2A connects the voltage input terminals 52a and 52d to the voltage input terminal 52e and 52h, respectively, to connect in parallel the light emitting arrays 51a and 51b connected in series to the light emitting arrays 51c and 51d connected in series.

In this state, the voltage input terminals 52a and 52e and the voltage input terminals 52d and 52h are connected to the AC power supply P₁₀₀ through the input terminals 54a and 54b, respectively. Accordingly, the specified voltage of 50 V is applied to each of the light emitting arrays 51a to 51d, and the light emitting arrays 51a to 51d can normally operate.

Next, as shown in FIG. 10, when the lighting apparatus 1A is connected to the 50 V AC power supply P₅₀, the switching controller 2A connects the voltage input terminals 52a, 52c, 52e, and 52g to each other and connects the voltage input terminals 52b, 52d, 52f, and 52h to each other to connect all the light emitting arrays 51a to 51d in parallel.

In this state, the switching controller 2A connects the voltage input terminals 52a, 52c, 52e, and 52g and the voltage input terminals 52b, 52d, 52f, and 52h to the AC power supply P₅₀ through the input terminals 54a and 54b, respectively. The specified voltage of 50 V is thus applied to each of the light emitting arrays 51a to 51d, and the light emitting arrays 51a to 51d can normally operate.

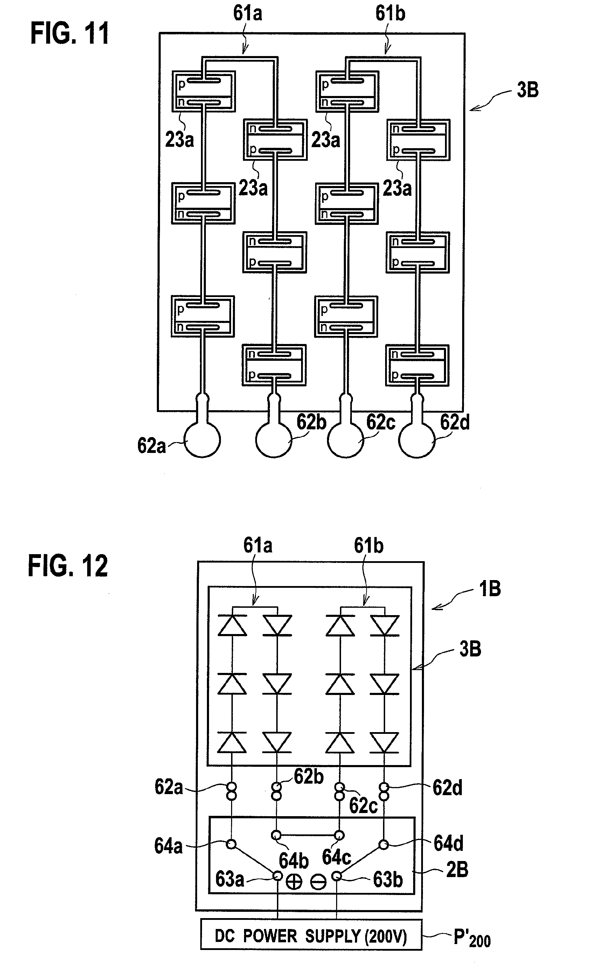

In the aforementioned embodiment, the description is given of the lighting apparatus 1 and light emitting unit 3 which are connected to an AC power supply. However, the present invention may be applied to a lighting apparatus and a light emitting unit which are connected to a DC power supply. For example, in a light emitting unit 3B of a second modification shown in FIG. 11, semiconductor light emitting devices 23a of the light emitting arrays 61a and 61b are connected so that current flows therethrough in the same direction. At the both ends of the light emitting arrays 61a and 61b, voltage input terminals 62a to 62d are provided. Accordingly, the voltage input terminals 62a to 62d are connected to a DC power supply so that current flows through the light emitting arrays 61a and 61b in a specified direction.

Next, a description is given of an operation of the lighting apparatus 1B having the aforementioned light emitting unit 3B when the specified voltage of the light emitting arrays 61a and 61b is 100 V. The lighting apparatus 1B includes a switching controller 2B having input terminals 63a and 63b which are connected to a DC power supply P'₂₀₀ or P'₁₀₀ and output terminals 64a to 64d which are connected to the voltage input terminals 62a to 62d.

As shown in FIG. 12, when the lighting apparatus 1B is connected to the DC power supply P'₂₀₀ of 200 V, the switching controller 2B connects the voltage input terminals 62b to the voltage input terminal 62c to connect the light emitting arrays 61a and 61b in series. In this state, the switching controller 2B connects the voltage input terminals 62a and 62d to the DC power supply P'₁₀₀, so that the specified voltage of 100 V is applied to each of the light emitting arrays 61a and 61b. The light emitting arrays 61a and 61b can therefore normally operate.

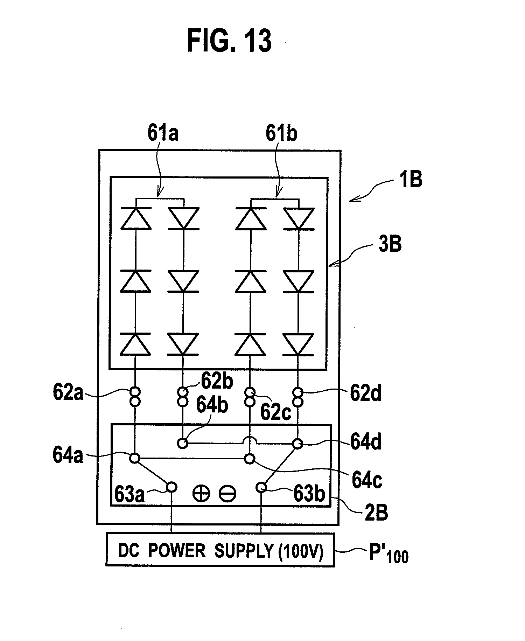

As shown in FIG. 13, when the lighting apparatus 1B is connected to the DC power supply P'₁₀₀ of 100 V, the switching controller 2B connects the voltage input terminals 62a and 62b to the voltage input terminals 62c and 62d, respectively, to connect the light emitting arrays 61a and 61b in parallel. In this state, the switching controller 2B connects the voltage input terminals 62a and 62c and voltage input terminals 62d and 62b to the DC power supply P'₁₀₀, so that the specified voltage of 100 V is applied to each of the light emitting arrays 61a and 61b. The light emitting arrays 61a and 61b can therefore normally operate.

Moreover, the numbers of light emitting arrays and voltage input terminals should not be especially limited to those of the aforementioned first embodiment. The number of voltage input terminals should be not less than (N+1) when the number of light emitting arrays is N (N>=2).

Furthermore, the configurations and numbers of the semiconductor light emitting devices 23a and 23b shown in the aforementioned first embodiment are just examples and can be properly changed depending on the desired supplied voltage.

In the first embodiment, the power supplies of 100 V and 200 V are switched. However, the switching may be performed based on another voltage value between 100 and 200 V, for example 110 V while all the light emitting arrays are not caused to emit light.

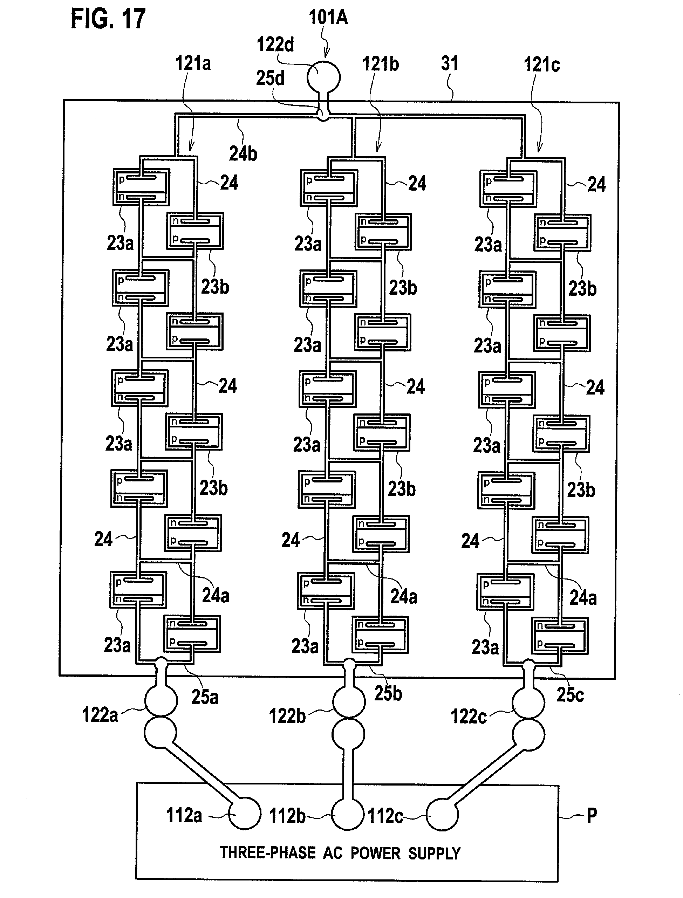

In the aforementioned second embodiment, the other ends of the light emitting arrays 121a, 121b, and 121c are connected to the power input terminals 122b, 122c, and 122a, respectively, but the light emitting unit may be configured as shown in FIG. 17. Specifically, the other ends of the light emitting arrays 121a to 121c are connected to each other by an auxiliary wiring film 24b, and a pad electrode 25d is formed in the middle of the auxiliary film 24b. Furthermore, the pad electrode 25d is connected to a ground terminal 22d grounded through an Au or Al wire. The other ends of the light emitting arrays 121a to 121c are thus grounded through the ground terminal 22d.

The configurations and numbers of the semiconductor light emitting devices 23a and 23b shown in the aforementioned second embodiment are just examples and can be properly changed depending on the desired supplied voltage.

In the second embodiment, the threshold voltage Vₜ is set so that the light emitting unit 101 is always lighted but may be set so that the light emitting unit 101 temporarily blacks out.

## Claims

1. A semiconductor light emitting unit, comprising:
N light emitting arrays (N>=2) each including one or a plurality of semiconductor light emitting devices formed on a same substrate, the light emitting arrays having same specified voltage; and
at least (N+1) voltage input terminals provided corresponding to ends of the individual light emitting arrays, wherein
the voltage input terminals allow the light emitting arrays to be brought into serial or parallel connections to each other in order that the specified voltage is applied to each light emitting array.

2. The light emitting unit of claim 1, wherein each of the light emitting arrays includes a same number of the semiconductor light emitting devices.

3. The light emitting unit of any one of claims 1 and 2, wherein
each of the light emitting arrays includes the 2M semiconductor light emitting devices, and
the M semiconductor light emitting devices are connected to allow current to flow therethrough in a direction opposite to that of the remaining M semiconductor light emitting arrays.

4. The light emitting unit of any one of claims 1 to 3, wherein
the number of the light emitting arrays is two, and
the number of the voltage input terminals is three.

5. A lighting apparatus, comprising:
a light emitting unit including: N light emitting arrays (N>=2) having one or a plurality of semiconductor light emitting devices formed on a same substrate, the light emitting arrays having same specified voltage; and at least (N+1) of voltage input terminals provided corresponding to ends of the individual light emitting arrays; and
a switching controller switching the voltage input terminals, wherein
according to voltage applied to the light emitting unit, the switching controller causes the light emitting arrays to be connected in parallel or in series to make voltage applied to each of the light emitting arrays equal to the specified voltage and automatically switches the voltage input terminals to which the voltage is inputted.

6. A light emitting unit comprising:
three light emitting arrays each including one or a plurality of semiconductor light emitting devices formed on a same substrate; and
three power input terminals which are provided at ends of the respective light emitting arrays and are supplied with a three-phase AC power supply, wherein
the power input terminals are individually supplied with three types of AC power with different phases.

7. The light emitting unit of claim 6, wherein
the other ends of the three light emitting arrays are electrically connected to each other and grounded.

8. The light emitting unit of any one of claims 6 and 7, wherein
at least any one of the three light emitting arrays is supplied with voltage not less than a threshold voltage necessary to light the light emitting array.

9. The light emitting unit of any one of claims 6 to 8, wherein
each of the light emitting arrays includes the 2M semiconductor light emitting devices, and
the M semiconductor light emitting devices are connected to allow current to flow therethrough in a direction opposite to that of the remaining M semiconductor light emitting devices.

10. The light emitting unit of any one of claims 6 to 9, wherein each of the light emitting arrays includes a same number of the semiconductor light emitting devices.
